# EUROPÄISCHE PATENTSCHRIFT

(11) **EP 1 222 126 B1**
(45) Veröffentlichungstag und Bekanntmachung des Hinweises auf die Patenterteilung: **17.03.2004**
(21) Anmeldenummer: 00972609.2
(22) Anmeldetag: 30.09.2000
(51) Int. Cl.: B65G 43/02

(54) **EINRICHTUNG ZUR ÜBERWACHUNG EINER FÖRDERANLAGE**
DEVICE FOR MONITORING A CONVEYOR
DISPOSITIF POUR CONTROLER UNE INSTALLATION DE CONVOYAGE

(30) Priorität: 22.10.1999 DE 19951199
(43) Veröffentlichungstag der Anmeldung: 17.07.2002
(73) Patentinhaber: Phoenix AG, 21079 Hamburg (DE)
(72) Erfinder: KÜSEL, Bernd, 21077 Hamburg (DE)
(86) Internationale Anmeldenummer: PCT/DE2000/003455
(87) Internationale Veröffentlichungsnummer: WO 2001/030673

(56) Entgegenhaltungen:
- DE-A- 2 413 543
- DE-A- 3 106 568
- DE-A- 19 902 759
- US-A- 3 651 506

## Beschreibung

Die Erfindung betrifft eine Einrichtung zur Überwachung einer Förderanlage, umfassend
- einen Fördergurt aus elastomerem Werkstoff mit einer Tragseite für das Fördermaterial und einer Laufseite, wobei der Fördergurt zumeist einen eingebetteten Festigkeitsträger aufweist; sowie
- sonstige Anlagenteile, nämlich Antriebstrommel, Umkehrtrommel, Umlenktrommel, Tragrollen, Traggerüste, Aufgabeschurre sowie gegebenenfalls weitere Bauteile.

Mit der gattungsgemäßen Einrichtung sind folgende zwei Problemkreise verbunden:
A) Fördergurte werden beim Auftreffen des zu fördernden Schüttgutes stark beansprucht. Da insbesondere im Bergbau eine gleichmäßige Stückgröße nicht gewährleistet werden kann, kommt es häufig zu Beschädigungen der Tragseite des Fördergurtes durch besonders große oder scharfkantige Stücke. Beschädigungen der Tragseite sind kritisch, weil dort Fördermaterial und Wasser eindringen kann, verbunden mit Folgeschäden unter Erfassung des Festigkeitsträgers (Karkasse) und der Laufseite. Die Schäden werden schließlich immer größer und führen letztlich zum Ausfall des Fördergurtes, sofern nicht rechtzeitig repariert wird.
   Bei großen Förderstücken, beispielsweise Erz, Abraum und Gestein, besteht ferner die Gefahr, daß sich diese in der Aufgabeschurre verklemmen. Die hiermit verbundene Reibung führt dann häufig zu einem raschen, vorzeitigen Verschleiß der Tragseite des Fördergurtes. Auch kann es infolge von Reibungswärme und Funkenbildung zu Bränden kommen, was unter Tage eine besondere große Gefahr darstellt.
   In der Druckschrift DE-A-42 40 094 wird nun eine Einrichtung zur Überwachung eines Materialstromes einer Förderanlage beschrieben, wobei die Förderanlage so gesteuert wird, daß bei maximaler Auslastung der Förderanlage der Schieflauf des Fördergurtes vermieden und der Verschleiß minimiert werden. Die Einrichtung besteht dabei aus einer Lichtquelle, die ein Lichtband auf den Materialstrom projiziert, wobei eine zusätzliche Kamera einen hierdurch abgebildeten Oberkantenverlauf des Fördermaterials sowie des Fördergurtes erfaßt. Eine Bildauswertungseinheit analysiert dann den Oberkantenverlauf.
   Diese Einrichtung ist sehr aufwendig konzipiert und zudem äußerst störanfällig. Außerdem ist bei einem heterogenen Fördermaterial mit kleinen, mittelgroßen und sehr großen Förderstücken der Oberkantenverlauf nur unzureichend zu ermitteln. Die Analyse mittels der Bildauswertungseinheit ist somit mit Fehlerquellen behaftet.
   Außerdem ist mit dieser Einrichtung nicht der Problemkreis (B) erfaßbar.
B) Durch Fremdkörper kann es vereinzelt zu Penetrationen des Fördergurtes kommen. Fremdkörper können Schurrenteile, Tragrollen und andere Bauteile der Förderanlage sein. Auch Werkzeuge, Abstechreste in Gießereien und scharfkantige Materialien, die sich im geförderten Gut befinden, sind Gefahrenquellen.
   Bei ungünstigem Auftreffen eines Fremdkörpers auf den Fördergurt kann es zum Verklemmen des Körpers in einem Anlagenteil kommen. Der Fördergurt wird durchstoßen und läuft nahezu ungehindert weiter, weil die Fördergurtantriebskraft wesentlich höher ist als der Widerstand des Fördergurtes gegenüber dem verklemmten Fremdkörper. Diese Situation hat die Längsschlitzung des Fördergurtes zur Folge. Eine Reparatur des Fördergurtes ist dann in den meisten Fällen nicht möglich oder unwirtschaftlich. Der entstandene Schaden ist beträchtlich.
   Methoden zur Vermeidung derartiger Schlitzungen bestehen vorrangig aus Aktivsystemen, wie in die Tragseite des Fördergurtes integrierte Querarmierungen, oder Passivsystemen (z.B. Leiterschleifen, DE-C-44 44 264), die in definierten Abständen - beispielsweise 50 m - in den Fördergurt einvulkanisiert werden. Bei Beschädigung einer Leiterschleife wird ein elektroinduktiver Stromkreis unterbrochen, was über Detektoren zum Abschalten der Förderanlage führt.
   Querarmierungen können den Widerstand gegen Schlitzungen beträchtlich erhöhen. Trotzdem kann es zu den oben beschriebenen Beschädigungen kommen.
   Leiterschleifen bestehen aus feinen Metallcorden, die empfindlich auf äußere Einflüsse, wie ständige Aufschläge sowie Längs- und Querbiegewechsel, reagieren. Es kommt häufig zu Fehlmeldungen. Ihre Lebensdauer ist sehr begrenzt.
   Außerdem ist diese Methode nicht zur Erfassung des Problemkreises (A) geeignet, da eine Materialblockade durch ein übergroßes Förderstück nicht zwangsläufig zu einer Penetration führen muß.

Die Aufgabe der Erfindung besteht nun darin, für den gesamten Problemkreis (A, B) eine Einrichtung zur Überwachung einer Förderanlage bereit zu stellen, die frühzeitig eine Beschädigung des Fördergurtes erkennt sowie verschleißfrei, wartungsarm und bei möglichst geringem technischen Aufwand wirtschaftlich ist.

Gelöst wird diese Aufgabe dadurch, daß die Einrichtung im Bereich, wo keine Materialförderung stattfindet, mit einem opto-elektronischen System versehen ist, das unter Beobachtung der Tragseite eine Beschädigung des Fördergurtes optisch erfaßt und meldet, gegebenenfalls in Verbindung mit einer automatischen Abschaltung der Förderanlage.

Das opto-elektronische System ist vorzugsweise im Bereich der Antriebstrommel, Umkehrtrommel oder Umlenktrommel installiert. Dort ist der üblicherweise gemuldete Fördergurt frei von Fördermaterial und zudem plan ausgerichtet. Vertiefungen oder andere Veränderungen der Tragseite werden hier besonders gut erkannt.

Zweckmäßigerweise umfaßt die Einrichtung, insbesondere in Verbindung mit großstreckigen Förderanlagen, die mehrere Kilometer lang sein können, zusätzlich
- wenigstens ein detektierbares Element, das im Fördergurt integriert ist, insbesondere in Form mehrerer Elemente, die in Längs- und/oder Querrichtung in Abständen zueinander angeordnet sind; sowie
- wenigstens eine Abtasteinheit, mit deren Hilfe unter Detektion des Elementes bzw. der Elemente eine Lokalisierung der Beschädigung berührungslos erfolgt.

Da sich der Fördergurt nur für eine kurze Zeitspanne an der Antriebstrommel, Umkehrtrommel bzw. Umlenktrommel vorbei bewegt, können auf diese Weise die dort von dem opto-elektronischen System erkannten Beschädigungen innerhalb der weiteren Streckenabschnitte lokalisiert werden, verbunden mit Reparaturmaßnahmen nach Stillsetzung der Förderanlage.

Das detektierbare Element ist vorzugsweise vollständig im Fördergurt eingebettet (einvulkanisiert) und zwar insbesondere innerhalb dessen Tragseite. Das detektierbare Element ist dabei insbesondere ein Transponder, ein Metallteilchen oder ein Permanentmagnet.

Zur Detektion (Identifikation) mittels der Abtasteinheit eignen sich alle physikalischen Prinzipien, mit denen sich die im Fördergurt eingebauten Elemente meßtechnisch erfassen lassen, wobei im Hinblick auf die oben genannten Elemente folgendes festzuhalten ist:
- Transponder können mittels Spezialantennen mit geeigneter Richtcharakteristik erfaßt werden.
- Metallteilchen lassen sich mittels induktiver Verfahren, wie beispielsweise Wirbelstrommethode, Radar- oder Mikrowellen oder ionisierender Strahlung oder Ultraschall detektieren.
- Permanentmagnete lassen sich mit allen magnetsensitiven Verfahren detektieren. Diese können beispielsweise sein: magnetinduktive Verfahren, magnetresistive Sensoren oder Hall-Effekt-Sensoren.

Die Erfindung wird nun anhand von Ausführungsbeispielen unter Bezugnahme auf schematische Zeichnungen erläutert. Es zeigen:
- Fig. 1: eine Seitenansicht einer Förderanlage mit einem opto-elektronischen System im Bereich der Umkehrtrommel;
- Fig. 2: eine Draufsicht einer Förderanlage mit Beschädigungen der Tragseite;
- Fig. 3: die Kopplung des opto-elektronischen Systems mit einem Prozeßrechner, einer Abtasteinheit und einer Antriebssteuerung.

In Verbindung mit diesen Figuren gilt folgende Bezugsziffernliste:
- **1**: Fördergurt
- **2**: Tragseite
- **3**: Laufseite
- **4**: Umkehrtrommel
- **5**: Kulminationspunkt
- **6**: opto-elektronisches System
- **7**: Beschädigung
- **8**: Prozeßrechner
- **9**: Abtasteinheit
- **10**: Antriebssteuerung

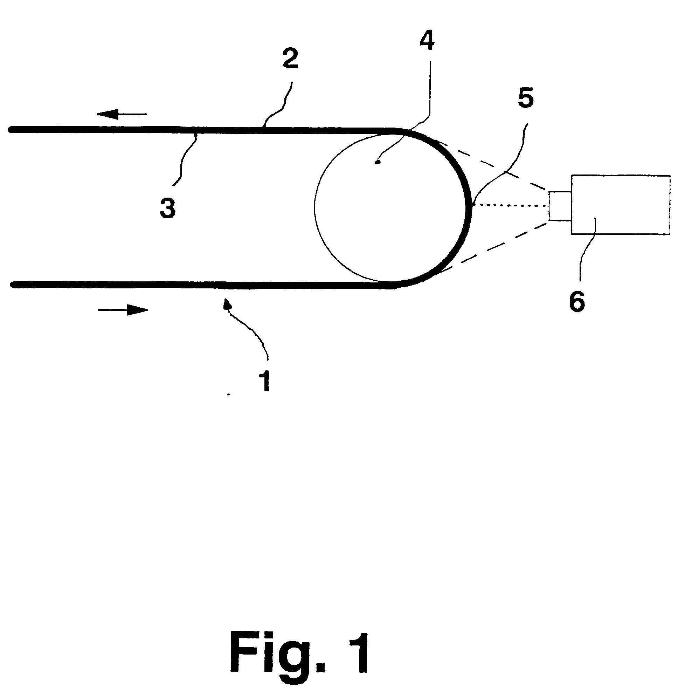

Fig. 1 zeigt eine Förderanlage, wobei der Fördergurt **1** aus elastomerem Werkstoff, d.h. aus Gummi oder gummiähnlichem Kunststoff, eine Tragseite **2** und eine Laufseite **3** umfaßt. In Förderrichtung (Pfeilrichtung) erfolgt nun an der Umkehrtrommel **4** mit dem Kulminationspunkt **5** der Tragseite **3** die Umlenkung des Fördergurtes.

Ein opto-elektronisches System **6** in Form einer digitalen Zeilen- oder Flächenkamera ist nun auf den Kulminationspunkt **5** gerichtet (punktierte Linie) und umfaßt dabei im wesentlichen den gesamten Bereich der Umkehrtrommel (gestrichelte Linienführung). Da in diesem Bereich der Fördergurt sowohl frei von Fördermaterial als auch plan ausgerichtet ist, kann hier eine Beobachtung der Tragseite auf Beschädigungen durch das opto-elektronische System besonders gut vorgenommen werden.

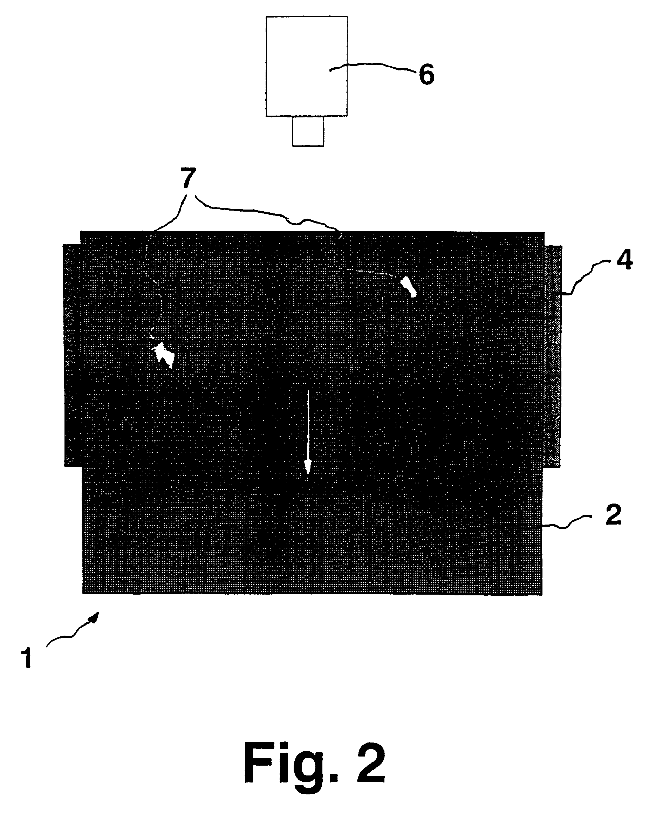

Fig. 2 zeigt die Förderanlage im Bereich der Umkehrtrommel **4** und des opto-elektronischen Systems **6**. Die Tragseite **2** des Fördergutes **1** weist dabei eine Beschädigung **7** auf, beispielsweise in Form von Vertiefungen. Das opto-elektronische System erkennt diese Beschädigung, verbunden mit einer entsprechenden Meldung.

Vorteilhafterweise ist das opto-elektronische System **6** mit einer Freiblasvorrichtung verbunden. Auf diese Weise wird die Optik sauber gehalten.

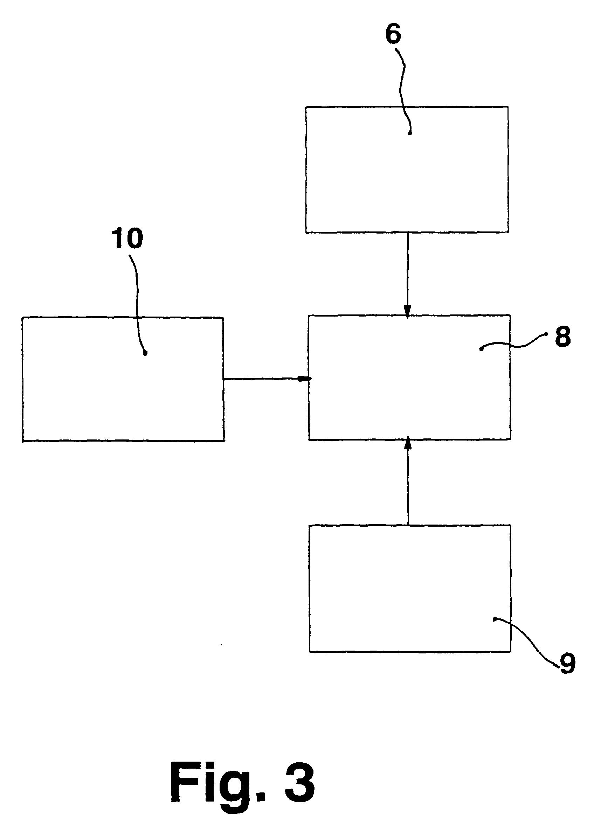

Fig. 3 zeigt das Zusammenwirken des opto-elektronischen Systems **6**, des Prozeßrechners **8**, der Abtasteinheit **9** und der Antriebssteuerung **10**, und zwar unter folgenden Gesichtspunkten:
- Das opto-elektronische System **6** meldet die Beschädigung **7** (Fig. 2), die mittels des Prozeßrechners **8** aufgezeichnet und ausgewertet wird, insbesondere in Verbindung mit einem akustischen und/oder optischen Warnhinweis.
- Mittels der Kopplung der Abtasteinheit **9** mit dem opto-elektronischen System **6** über den Prozeßrechner **8** als Schnittstelle kann eine gezielte Lokalisierung der Beschädigung **7** (Fig. 2) vorgenommen werden, was bei großstreckigen Förderanlagen von Vorteil ist.
   Die Abtasteinheit **9** selbst, die bevorzugt im Bereich der Antriebstrommel, Umkehrtrommel oder Umlenktrommel installiert ist, detektiert beispielsweise in den Fördergurt **1** (Fig. 1, 2) einvulkanisierte Permanentmagnete. Auf die diesbezügliche Technologie wurde im Rahmen der Beschreibung bereits näher eingegangen.
- Mittels der Kopplung der Antriebseinheit **10** mit dem opto-elektronischen System **6** wiederum über den Prozeßrechner **8** als Schnittstelle kann insbesondere bei der Erfassung starker Beschädigungen eine automatische Abschaltung der Förderanlage bewirkt werden.
   Die Antriebseinheit **10** ist ein rotierender Teil der Förderanlage, vorzugsweise die Antriebstrommel oder Umkehrtrommel **4** (Fig. 1, 2).

## Patentansprüche

1. Einrichtung zur Überwachung einer Förderanlage, umfassend
- einen Fördergurt (1) aus elastomerem Werkstoff mit einer Tragseite (2) für das Fördermaterial und einer Laufseite (3), wobei der Fördergurt zumeist einen eingebetteten Festigkeitsträger aufweist; sowie
- sonstige Anlagenteile, nämlich Antriebstrommel, Umkehrtrommel (4), Umlenktrommel, Tragrollen, Traggerüste, Aufgabeschurre sowie gegebenenfalls weitere Bauteile;
**dadurch gekennzeichnet, daß**
- die Einrichtung im Bereich, wo keine Materialförderung stattfindet, mit einem opto-elektronischen System (6) versehen ist, das unter Beobachtung der Tragseite (2) eine Beschädigung (7) des Fördergurtes (1) optisch erfaßt und meldet, gegebenenfalls in Verbindung mit einer automatischen Abschaltung der Förderanlage.

2. Einrichtung nach Anspruch 1, **dadurch gekennzeichnet, daß** das opto-elektronische System (6) im Bereich der Antriebstrommel, Umkehrtrommel (4) oder Umlenktrommel installiert ist.

3. Einrichtung nach Anspruch 2, **dadurch gekennzeichnet, daß** das opto-elektronische System (6) auf den Kulminationspunkt (5) der Tragseite (2) des Fördergurtes (1) beim Vorbeilauf an der Antriebstrommel, Umkehrtrommel (4) oder Umlenktrommel gerichtet ist.

4. Einrichtung nach einem der Ansprüche 1 bis 3, **dadurch gekennzeichnet, daß** das opto-elektronische System (6) wenigstens eine digitale Zeilen- oder Flächenkamera umfaßt, insbesondere in Form einer digitalen Zeilenkamera.

5. Einrichtung nach einem der Ansprüche 1 bis 4, **dadurch gekennzeichnet, daß** das opto-elektronische System (6) bei einer Beschädigung (7) des Fördergurtes (1) einen akustischen und/oder optischen Warnhinweis auslöst.

6. Einrichtung nach einem der Ansprüche 1 bis 5, umfassend zusätzlich
- wenigstens ein detektierbares Element, das im Fördergurt (1) integriert ist, insbesondere in Form mehrerer Elemente, die in Längs- und/oder Querrichtung in Abständen zueinander angeordnet sind; sowie
- wenigstens eine Abtasteinheit (9), mit deren Hilfe unter Detektion des Elementes bzw. der Elemente eine Lokalisierung der Beschädigung (7) berührungslos erfolgt.

7. Einrichtung nach Anspruch 6, **dadurch gekennzeichnet, daß** das detektierbare Element vollständig im Fördergurt (1) eingebettet ist.

8. Einrichtung nach Anspruch 6 oder 7, **dadurch gekennzeichnet, daß** das detektierbare Element innerhalb der Tragseite (2) des Fördergurtes (1) angeordnet ist.

9. Einrichtung nach einem der Ansprüche 6 bis 8, **dadurch gekennzeichnet, daß** das detektierbare Element ein Transponder, ein Metallteilchen oder ein Permanentmagnet ist.

10. Einrichtung nach einem der Ansprüche 6 bis 9, **dadurch gekennzeichnet, daß** die Abtasteinheit im Bereich der Antriebstrommel, Umkehrtrommel (4) oder Umlenktrommel installiert ist.

11. Einrichtung nach einem der Ansprüche 1 bis 10, **dadurch gekennzeichnet, daß** das opto-elektronische System (6) mit einem Prozeßrechner (8) gekoppelt ist.

12. Einrichtung nach Anspruch 11 in Verbindung mit einem der Ansprüche 6 bis 10, **dadurch gekennzeichnet, daß** der Prozeßrechner (8) mit der Abtasteinheit (9) gekoppelt ist.

13. Einrichtung nach Anspruch 11 oder 12, **dadurch gekennzeichnet, daß** der Prozeßrechner (8) mit einer Antriebssteuerung (10) gekoppelt ist, und zwar zwecks automatischer Abschaltung der Förderanlage.

14. Einrichtung nach einem der Ansprüche 1 bis 13, **dadurch gekennzeichnet, daß** das opto-elektronische System (6) mit einer Freiblasvorrichtung verbunden ist.

## Claims

1. Device for monitoring a conveyor installation, comprising
- a conveyor belt (1) made of elastomer material with a carrying side (2) for the material being conveyed and a backing side (3), the conveyor belt usually exhibiting an embedded strength member, and
- miscellaneous installation parts, namely driving pulley, reversing pulley (4), deflecting pulley, support rollers, supporting frames, feed chute and possibly further components,
**characterised in that**
- in the area where no material conveying takes place the device is provided with an optoelectronic system (6) which, while observing the carrying side (2), optically detects damage (7) to the conveyor belt (1) and reports it, possibly in conjunction with automatic shutdown of the conveyor installation.

2. Device according to claim 1, **characterised in that** the optoelectronic system (6) is installed in the area of the driving pulley, reversing pulley (4) or deflecting pulley.

3. Device according to claim 2, **characterised in that** the optoelectronic system (6) is aimed at the culmination point (5) of the carrying side (2) of the conveyor belt (1) as it runs past on the driving pulley, reversing pulley (4) or deflecting pulley.

4. Device according to one of claims 1 to 3, **characterised in that** the optoelectronic system (6) comprises at least one digital line or area camera, in particular in the form of a digital line camera.

5. Device according to one of claims 1 to 4, **characterised in that** the optoelectronic system (6) triggers an acoustic and/or optical warning signal in the event of damage (7) to the conveyor belt (1).

6. Device according to one of claims 1 to 5, additionally comprising
- at least one detectable element which is integrated in the conveyor belt (1), in particular in the form of a plurality of elements which are arranged in the longitudinal and/or transverse direction at intervals from one another, and
- at least one scanning unit (9) with the aid of which the damage (7) is located without contact by detection of the element or elements.

7. Device according to claim 6, **characterised in that** the detectable element is completely embedded in the conveyor belt (1).

8. Device according to claim 6 or 7, **characterised in that** the detectable element is arranged inside the carrying side (2) of the conveyor belt (1).

9. Device according to one of claims 6 to 8, **characterised in that** the detectable element is a transponder, a small metal part or a permanent magnet.

10. Device according to one of claims 6 to 9, **characterised in that** the scanning unit is installed in the area of the driving pulley, reversing pulley (4) or deflecting pulley.

11. Device according to one of claims 1 to 10, **characterised in that** the optoelectronic system (6) is coupled with a process computer (8).

12. Device according to claim 11 in combination with one of claims 6 to 10, **characterised in that** the process computer (8) is coupled with the scanning unit (9).

13. Device according to claim 11 or 12, **characterised in that** the process computer (8) is coupled with a drive control (10), for the purpose of automatic shutdown of the conveyor installation.

14. Device according to one of claims 1 to 13, **characterised in that** the optoelectronic system (6) is connected with an air-blowing clearing device.

## Revendications

1. Dispositif pour surveiller une installation de convoyage, comprenant
- une courroie de convoyeur (1) en un matériau élastomère, avec une face support (2) pour le matériau à transporter et une face de défilement (3), la courroie de transport présentant au moins un support de résistance incorporé ; et
- d'autres parties d'installations, précisément un tambour d'entraînement, un tambour d'inversion (4), un tambour de renvoi, des rouleaux ou galets support, des bâtis support, une goulotte d'alimentation ainsi que, le cas échéant, d'autres composants ;
**caractérisé en ce que**
- le dispositif, dans la zone où ne se produit aucun transport de matériaux, est muni d'un système optoélectronique (6) détectant optiquement un endommagement (7) de la courroie de transport (1 ), en observant la face support (2), et assurant une fonction d'information, le cas échéant en liaison avec une mise hors circuit automatique de l'installation de convoyage.

2. Dispositif selon la revendication 1, **caractérisé en ce que** le système optoélectronique (6) est installé dans la zone du tambour d'entraînement, du tambour d'inversion (4) ou du tambour de renvoi.

3. Dispositif selon la revendication 2, **caractérisé en ce que** le système optoélectronique (6) est pointé sur le point de culmination (5) de la face support (2) de la courroie de transport (1), lors du passage sur le tambour d'entraînement, le tambour d'inversion (4) ou le tambour de renvoi.

4. Dispositif selon l'une des revendications 1 à 3, **caractérisé en ce que** le système optoélectronique (6) comprend au moins une caméra numérique à lignes ou à éléments de surface, en particulier sous la forme d'une caméra numérique à lignes.

5. Dispositif selon l'une des revendications 1 à 4, **caractérisé en ce que** le système optoélectronique (6) déclenche un avertissement acoustique et/ou optique dans le cas où la courroie de transport (1) subit un endommagement (7).

6. Dispositif selon l'une des revendications 1 à 5, comprenant en plus
- au moins un élément détectable, intégré dans la courroie de transport (1 ), en particulier réalisé sous la forme de plusieurs éléments, disposés à distance les uns par rapport aux autres dans la direction longitudinale et/ou dans la direction transversale ; et
- au moins une unité d'exploration (9), à l'aide de laquelle on effectue sans contact une localisation de l'endommagement (7) par détection de l'élément ou des éléments.

7. Dispositif selon la revendication 6, **caractérisé en ce que** l'élément détectable est complètement incorporé dans la courroie de transport (1 ).

8. Dispositif selon la revendication 6 ou 7, **caractérisé en ce que** l'élément détectable est disposé à l'intérieur de la face support (2) de la courroie de transport (1).

9. Dispositif selon l'une des revendications 6 à 8, **caractérisé en ce que** l'élément détectable est un transpondeur, une particule métallique ou un aimant permanent.

10. Dispositif selon l'une ou plusieurs des revendications 6 à 9, **caractérisé en ce que** l'unité d'exploration est installée dans la zone du tambour d'entraînement, du tambour d'inversion (4) ou du tambour de renvoi.

11. Dispositif selon l'une des revendications 1 à 10, **caractérisé en ce que** le système optoélectronique (6) est couplé à un calculateur de processus (8).

12. Dispositif selon la revendication 11, en liaison avec l'une des revendications 6 à 10, **caractérisé en ce que** le calculateur de processus (8) est couplé à l'unité d'exploration (9).

13. Dispositif selon la revendication 11 à 12, **caractérisé en ce que** le calculateur de processus (8) est couplé à un dispositif de commande d'entraînement (10) et, précisément, dans le but de produire une mise hors service automatique de l'installation de transport.

14. Dispositif selon l'une des revendications 1 à 13, **caractérisé en ce que** le système optoélectronique (6) est relié à un dispositif de nettoyage par soufflage.
